Europäisches Patentamt

European Patent Office

Office européen des brevets

(11) Numéro de publication : **0 473 489 A1**

# (12) DEMANDE DE BREVET EUROPEEN

(21) Numéro de dépôt : **91402224.9**

(22) Date de dépôt : **09.08.91**

(51) Int. Cl.⁵ : **G21C 19/20, F16L 23/16**

(30) Priorité : **28.08.90 FR 9010725**

(43) Date de publication de la demande :
**04.03.92 Bulletin 92/10**

(84) Etats contractants désignés :
**DE GB IT**

(71) Demandeur : **FRAMATOME**
**Tour Fiat 1, Place de la Coupole**
**F-92400 Courbevoie (FR)**

(72) Inventeur : **De Seroux, Nicolas**
**324 rue Garibaldi**
**F-69007 Lyon (FR)**
Inventeur : **Limouzin, Dominique**
**74 Rue Cuvier**
**F-69006 Lyon (FR)**

(74) Mandataire : **Bouget, Lucien et al**
**Cabinet Lavoix 2, Place d'Estienne d'Orves**
**F-75441 Paris Cédex 09 (FR)**

(54) **Procédé de contrôle de la mise en place d'un élément transportable et de l'étanchéité de la liaison avec une structure fixe et utilisation de ce procédé.**

(57) La structure fixe (10) comporte une surface d'appui (10a) sur laquelle vient reposer une surface d'appui (8a) correspondante de l'élément transportable (8), avec interposition entre les surfaces d'appui (8a, 10a), d'au moins deux joints d'étanchéité (13a, 13b) ayant un contour fermé et disposés à l'intérieur l'un de l'autre. On mesure la pression dans l'espace (18) compris entre les joints d'étanchéité (13a, 13b) et délimité par les surfaces d'appui (8a, 10a), pendant la mise en place de l'élément transportable (8) pour effectuer le contrôle de son étanchéité. On compare la pression maximale mesurée et/ou la variation de la pression mesurée au cours du temps, à des valeurs prédéterminées correspondant à une mise en place correcte de l'élément transportable (8).

FIG 2

EP 0 473 489 A1

L'invention concerne un procédé de contrôle de la mise en place et de l'étanchéité d'un élément transportable sur une structure fixe et l'utilisation de ce procédé dans le cas de la mise en place d'une hotte de transport d'un assemblage combustible pour réacteur nucléaire à neutrons rapides sur une structure fixe qui peut être constituée par la dalle de fermeture de la cuve du réacteur nucléaire.

Les réacteurs nucléaires à neutrons rapides refroidis par un métal liquide tel que le sodium comportent un coeur constitué par des assemblages de forme prismatique et allongée plongés dans du sodium liquide contenu dans la cuve du réacteur.

Il peut être nécessaire de prélever des assemblages combustibles dans le coeur du réacteur, à l'intérieur de la cuve, par exemple pour remplacer des assemblages usagés ou défectueux par des assemblages neufs. Les assemblages qui sont sortis de la cuve du réacteur sont à l'état irradié et produisent des rayonnements radio-actifs. De plus, ces assemblages ont une activité résiduelle et sont le siège d'un dégagement thermique produit par les réactions nucléaires dans le combustible irradié. Enfin, ces assemblages retiennent, au moment de leur sortie de la cuve, une certaine quantité de sodium liquide.

Les assemblages combustibles sortis de la cuve du réacteur nucléaire doivent donc être disposés dans des conteneurs assurant la protection biologique du milieu dans lequel les assemblages sont déplacés ou stockés de manière temporaire. Il est également nécessaire de refroidir l'assemblage pendant son transfert.

On utilise habituellement, pour effectuer le transfert et le stockage temporaire des assemblages combustibles des réacteurs nucléaires à neutrons rapides, des hottes comportant un corps massif en un matériau absorbant les rayonnements nucléaires dans lequel est ménagé un logement pour un assemblage combustible nu ou noyé dans un étui rempli de sodium pour assurer son refroidissement. Ces hottes sont équipées de vannes à leur partie inférieure.

Le logement de l'assemblage réalisé sous la forme d'un canal central à l'intérieur du corps de la hotte débouche, par une ouverture obturable de manière étanche, par exemple une vanne, à l'une des extrémités du corps de la hotte, de manière à permettre l'introduction de l'assemblage dans la hotte et son extraction. Ces opérations sont effectuées après avoir placé l'ensemble constitué de la hotte de transfert et de sa vanne en appui sur une structure fixe, par exemple une structure solidaire de la dalle de fermeture de la cuve du réacteur, de manière que le canal central de la hotte se trouve dans le prolongement axial d'un puits de traversée de la structure fixe, par exemple d'un puits vertical de traversée de la dalle.

Entre la surface inférieure d'appui du support de la vanne équipant la hotte de transport et la surface d'appui correspondante de la structure fixe est intercalé un dispositif d'étanchéité comportant au moins deux joints toriques placés de manière concentrique. Le dispositif d'obturation étanche de l'ouverture du canal central de la hotte débouchant sur la surface d'appui du support de la vanne et un second dispositif de fermeture étanche de l'extrémité supérieure du puits vertical de la structure fixe débouchant sur la structure d'appui de la structure fixe sont disposés à l'intérieur de la zone de contact du joint interne du dispositif d'étanchéité, dans des positions axiales alignées.

Un dispositif d'ouverture et de fermeture étanche du passage de communication entre le canal central de la hotte et le puits vertical a été décrit dans la demande de brevet 90-08116 déposée le 27 juin 1990 par la Société FRAMATOME. Lors de la mise en place de la hotte de transport et de sa vanne sur la structure d'appui fixe, il est nécessaire de vérifier que cette mise en place a été réalisée de manière correcte, avant d'effectuer l'ouverture de la vanne de la hotte et de la vanne de puits mettant en communication le logement central de la hotte avec le puits de traversée de la dalle. En effet, le puits de traversée de la dalle qui communique avec le volume interne du réacteur et/ou le logement de la hotte qui est susceptible de renfermer un assemblage combustible irradié contiennent des gaz radio-actifs dont il est nécessaire d'éviter qu'ils ne s'échappent vers l'atmosphère extérieure, au moment de l'ouverture des vannes.

Au moment de sa mise en place sur la surface d'appui, la vanne de la hotte de transport de masse importante assure un certain écrasement des joints, ce qui permet d'obtenir une bonne étanchéité, si l'écrasement des joints est réalisé de manière régulière sur toute leur périphérie. Dans le cas où la hotte vient se présenter sur la surface d'appui dans une position légèrement inclinée par rapport à la verticale, l'écrasement des joints portés par la vanne est néanmoins correctement assuré puisque la vanne est découplée de la structure de la hotte par un système souple à soufflet.

Pour contrôler la mise en place d'un élément transportable tel qu'une hotte et l'étanchéité entre la surface d'appui de la vanne de la hotte et la surface d'appui de la structure fixe sur laquelle vient reposer la hotte, il est connu d'utiliser des dispositifs de contrôle assurant l'introduction d'un gaz sous pression ou la mise en dépression, par rapport à l'atmosphère, de l'espace compris entre les joints et délimité par les surfaces d'appui de la vanne et de la structure fixe. Le contrôle proprement dit est effectué en mesurant, grâce à un dispositif manométrique, le taux de fuite du gaz sous pression en direction de l'atmosphère ou de l'air atmosphérique en direction de l'espace entre les joints.

Une telle mesure est relativement longue, dans la mesure où elle nécessite une opération préalable de mise sous pression ou de mise sous vide de l'espace entre les joints et une mesure continue de la pression dans cet espace, pendant une durée qui peut être importante. Cela sous-entend l'introduction d'équipements supplémentaires donc une augmentation des risques de pannes.

Il en résulte un temps d'attente dans le cycle de manutention des assemblages combustibles, ce qui ralentit d'autant les opérations de chargement et de déchargement du réacteur nucléaire. En effet, le chargement et le déchargement du coeur d'un réacteur nucléaire nécessite de nombreuses opérations de transfert d'assemblages combustibles, si bien qu'il est extrêmement important de réduire au maximum le temps d'intervention nécessaire pour le transfert d'un assemblage, dans le but de limiter la période d'immobilisation du réacteur.

En outre, les dispositifs de contrôle connus de l'art antérieur sont relativement complexes et doivent comporter des éléments annexes tels qu'une réserve de gaz sous pression ou une pompe à vide.

Le but de l'invention est donc de proposer un procédé de contrôle de la mise en place d'un élément transportable et de l'étanchéité de sa liaison avec une structure fixe présentant une surface d'appui sur laquelle vient reposer une surface d'appui correspondante de l'élément transportable, avec interposition entre les surfaces d'appui d'au moins deux joints d'étanchéité ayant un contour fermé et disposés l'un à l'intérieur de l'autre, ces joints subissant un certain écrasement au moment de la mise en place de l'élément transportable sur la structure fixe, ce procédé étant d'une mise en oeuvre simple et permettant d'effectuer le contrôle de manière efficace et rapide.

Dans ce but, on mesure la pression dans l'espace compris entre les joints d'étanchéité et délimité par les surfaces d'appui de l'élément transportable et de la structure fixe, pendant la mise en place de l'élément transportable et on compare la pression maximale mesurée et/ou la variation de la pression mesurée au cours du temps, à des valeurs prédéterminées correspondant à une mise en place correcte de l'élément transportable.

Afin de bien faire comprendre l'invention, on va maintenant décrire, à titre d'exemple non limitatif, en se référant aux figures jointes en annexe, un mode de mise en oeuvre du procédé suivant l'invention, dans le cas de la mise en place d'une hotte de transfert d'un assemblage combustible d'un réacteur nucléaire à eau sous pression, sur une structure fixe du réacteur.

La figure 1 est une vue d'ensemble, en perspective éclatée et en coupe partielle, d'une hotte de transfert d'un assemblage combustible pour réacteur nucléaire à neutrons rapides, en appui par sa propre vanne sur une structure fixe.

La figure 2 est une demi-vue en coupe du dispositif d'étanchéité intercalé entre les surfaces d'appui de la hotte et de la structure fixe et de moyens de mise en oeuvre du procédé suivant l'invention.

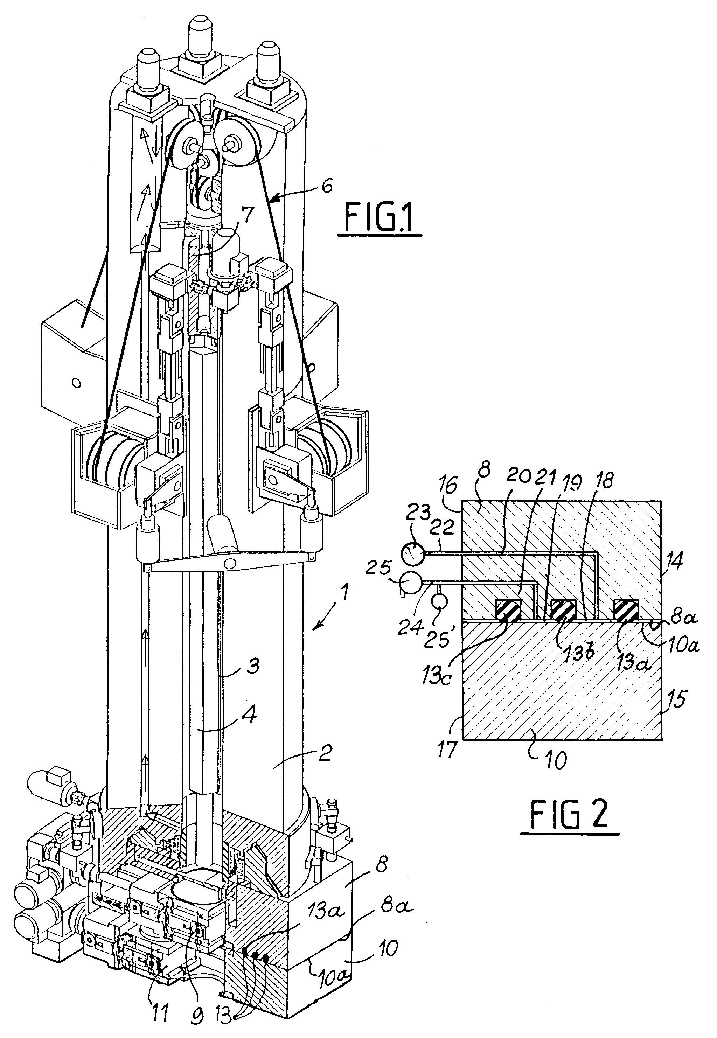

Sur la figure 1, on voit une hotte de transfert d'un assemblage combustible pour réacteur nucléaire désignée de manière générale par le repère 1. La hotte 1 comporte un corps de hotte 2 de forme cylindrique comportant, à sa partie centrale et suivant son axe, un canal 3 traversant le corps de hotte suivant toute sa longueur. Le corps de hotte est constitué par une pièce massive en acier de forte épaisseur et de grande longueur.

Dans le cas d'un assemblage combustible pour réacteur à neutrons rapides dont la longueur est supérieure à 4 m et présentant une section de forme hexagonale dont le côté a une longueur de 125 mm, le corps 2 de la hotte présente un diamètre extérieur de 1,30 m, un canal central d'un diamètre de 0,30 m et une longueur de 6 m. Le corps de la hotte présente donc une épaisseur de paroi de 0,50 m ; sa masse totale est voisine de 55 tonnes.

Sur la figure 1, l'assemblage combustible a été représenté dans sa position de transport à l'intérieur du canal central 3 du corps de la hotte. L'assemblage 4 n'occupe qu'une partie de la longueur du canal 3 ; dans la partie supérieure du canal 3 est placé le grappin 7 du dispositif de levage 6 de l'assemblage.

La partie inférieure du corps 2 de la hotte se raccorde par un système de liaison souple à soufflet au support 8 d'une vanne de hotte 9 motorisée permettant de réaliser l'ouverture ou la fermeture étanche de l'extrémité du canal 3 à sa partie inférieure débouchant à l'extrémité du corps 2.

Le support 8 de la vanne de hotte 9 est susceptible de venir reposer, par l'intermédiaire d'une surface d'appui 8a, sur une surface d'appui correspondante 10a du support 10 d'une vanne de puits 11 permettant de réaliser l'ouverture ou la fermeture étanche d'un puits de traversée, par exemple un passage de traversée d'une dalle recouvrant la cuve d'un réacteur contenant du sodium liquide et renfermant le coeur du réacteur.

Un dispositif d'étanchéité comportant des joints toriques 13 est interposé entre les surfaces d'appui 8a et 10a dans la position de raccordement de la hotte de transfert 1 représentée sur la figure 1.

Les organes d'obturation des vannes 9 et 11 sont disposés à l'intérieur de la zone délimitée par le joint torique 13a constituant la partie interne du dispositif d'étanchéité.

Lorsque les vannes 9 et 11 sont superposées, après mise en place de la hotte, et ouvertes, on peut faire passer l'assemblage combustible 4 d'une position immergée dans le sodium liquide remplissant la cuve du réacteur, à sa position de transfert à l'intérieur de la hotte 1, en utilisant le dispositif de levage 6.

Sur la figure 2, on voit à plus grande échelle, une partie du support 8 de la vanne de la hotte de transport et du support 10 de la vanne de puits.

Les supports 8 et 10 de forme annulaire comportent une face interne cylindrique, respectivement 14 et 15, dirigée vers l'intérieur de la hotte et du puits et une surface externe, respectivement 16 et 17, en contact avec l'atmosphère extérieure.

Trois joints toriques 13a, 13b et 13c sont disposés dans des logements correspondants du support de vanne 8 dont la hauteur est inférieure au diamètre nominal des joints 13a, 13b et 13c. De cette manière, lorsque la vanne de la hotte ne se trouve pas en position d'appui sur la surface 10a du support 10, une partie des joints 13a, 13b et 13c est saillante par rapport au logement correspondant.

Le joint 13a dont la dimension est inférieure à la dimension des joints 13b et 13c se trouve placé vers l'intérieur et le joint 13c dont la dimension est supérieure à la dimension des joints 13b et 13a, vers l'extérieur des supports 8 et 10. Le joint 13b est placé dans une position intermédiaire.

Les joints 13a, 13b et 13c sont disposés dans les logements correspondants du support 8, de manière concentrique.

Lorsque la hotte a été mise en place sur la structure fixe d'appui, comme représenté sur la figure 2, les joints 13a, 13b et 13c sont écrasés de manière à réaliser l'étanchéité entre les surfaces 8a et 10a. De plus, les joints 13 maintiennent les surfaces 8a et 10a légèrement écartées l'une de l'autre, si bien qu'il subsiste un premier espace annulaire fermé 18 et un second espace fermé 19 délimités par les surfaces 8a et 10a légèrement écartées l'une de l'autre, l'espace 18 étant situé entre les joints 13a et 13b et l'espace 19 entre les joints 13b et 13c.

Le support 8 est usiné intérieurement pour constituer un premier canal 20 débouchant sur la surface 8a entre les logements des joints 13a et 13b et un second canal 21 débouchant sur la surface 8a entre les logements des joints 13b et 13c. Lorsque la hotte est mise en place de manière à permettre à sa vanne de venir reposer sur la surface d'appui 10a du support 10, le canal 20 débouche dans l'espace intérieur 18 et le canal 21 dans l'espace extérieur 19.

Le canal 20 et l'espace intérieur 18 sont reliés par l'intermédiaire d'une canalisation 22 à un manomètre 23.

Le canal 21 est relié par l'intermédiaire d'une conduite 24 à une pompe à vide 25 et à un manomètre 25'.

Lors de la mise en place de la hotte sur la structure d'appui constituée par le support 10, la vanne de la hotte, de masse importante, provoque un écrasement des joints 13a, 13b et 13c, cet écrasement étant généralement compris entre 20 et 40 % du diamètre des joints. Cet écrasement des joints produit une diminution du volume des espaces 18 et 19 situés entre les joints, pendant la mise en place de la hotte.

L'air contenu dans les espaces situés entre les joints se comprime, de telle sorte que sa pression augmente depuis la pression atmosphérique jusqu'à une pression définie par l'amplitude d'écrasement des joints.

Pendant la mise en place de la hotte sur le support 10, la pression dans l'espace intérieur 18 est mesurée en continu par le manomètre 23.

La pression augmente très rapidement pendant la mise en place de la hotte, pour atteindre un maximum, lorsque les joints 13 sont dans leur état d'écrasement maximum.

La pression se maintient ensuite à la valeur maximale atteinte ou à une valeur proche, en fonction du degré d'étanchéité obtenu grâce aux joints 13a et 13b.

Préalablement à l'utilisation et à la mise en place de la hotte, on détermine par calcul et/ou par étalonnage la pression maximale en gaz, dans l'espace 18, pour une mise en place correcte de la hotte sur une surface d'appui parfaitement plane. On détermine également la variation de la pression au cours du temps, pour une durée très courte suivant la mise en place de la hotte, toujours dans l'hypothèse d'une mise en place correcte de la hotte.

On compare la pression maximale et les variations de cette pression pendant une durée très courte, de l'ordre de 30 secondes, avec la valeur correspondante ou les variations prédéterminées.

Dans le cas où la pression maximale obtenue, lors d'une mise en place effective de la hotte, est sensiblement identique à la pression maximale prédéterminée, on peut en déduire que la vanne de la hotte a été mise en place de manière correcte, la mesure et le contrôle étant pratiquement instantanés. On vérifie pendant une durée de 30 secondes que la pression dans l'espace 18 se maintient à un niveau proche de la valeur maximale ou diminue de manière très faible, selon la loi de variation prédéterminée.

On obtient ainsi une confirmation de l'étanchéité au niveau de la liaison hotte-structure fixe.

Il est également possible de mettre l'espace 19 en dépression grâce à la pompe à vide 25, après mise en place de la hotte. On dispose ainsi d'un moyen de dépannage en cas de fuite inopinée ou de rupture de joint pendant une opération de manutention.

La pompe à vide 25 permet d'évacuer toute trace de gaz susceptible de pénétrer dans l'espace 19 et pouvant provenir de l'intérieur de la hotte et du puits vertical, évitant ainsi toute contamination externe.

Le procédé suivant l'invention permet donc de vérifier de manière pratiquement instantanée ou en un intervalle de temps très court, de l'ordre de 30 secondes, la mise en place correcte de la hotte sur une surface d'appui.

Ce contrôle peut être réalisé grâce à des moyens très simples qui sont fixés, par exemple, sur le support de la vanne inférieure de la hotte.

Le procédé suivant l'invention permet donc en particulier de diminuer le temps nécessaire pour effectuer les opérations de remplacement d'assemblages combustibles d'un réacteur nucléaire à neutrons rapides refroidi par du sodium liquide.

De plus, la conception est telle que la vanne de la hotte peut glisser légèrement, horizontalement, sur la vanne de la structure fixe, sans rompre l'étanchéité. Cette disposition est utile en cas de séisme.

L'invention ne se limite pas au mode de réalisation qui a été décrit.

C'est ainsi qu'on peut utiliser un appareil de mesure d'un type quelconque pour effectuer la mesure de pression dans l'espace situé entre les joints, pendant la mise en place de la hotte. Cet appareil de mesure de pression peut être relié à un dispositif d'enregistrement ou à un moyen d'affichage ou d'alarme permettant de contrôler de manière rapide et précise, les conditions de mise en place de la hotte sur une surface d'appui.

Enfin, le procédé suivant l'invention peut être utilisé pour contrôler la mise en place d'éléments transportables différents d'une hotte de manutention d'assemblages combustibles, ces éléments transportables comportant au moins deux joints d'étanchéité venant en contact, lors de la mise en place, avec une surface d'appui d'une structure fixe.

## Revendications

1.- Procédé de contrôle de la mise en place d'un élément transportable (1) et de l'étanchéité de sa liaison avec une structure fixe (10) présentant une surface d'appui (10a) sur laquelle vient reposer une surface d'appui correspondante (8a) de l'élément transportable (1) avec interposition entre les surfaces d'appui (8a, 10a), d'au moins deux joints d'étanchéité (13a, 13b, 13c) ayant un contour fermé et disposés l'un à l'intérieur de l'autre, ces joints (13a, 13b, 13c) subissant un certain écrasement au moment de la mise en place de l'élément transportable (1) sur la structure fixe (10), caractérisé par le fait qu'on mesure la pression dans l'espace (18) compris entre les joints d'étanchéité (13a, 13b) et délimité par les surfaces d'appui (8a, 10a) de l'élément transportable (1) et de la structure fixe (10), pendant la mise en place de l'élément transportable (1) et qu'on compare la pression maximale mesurée et/ou la variation de la pression mesurée au cours du temps, à des valeurs prédéterminées correspondant à une mise en place correcte de l'élément transportable.

2.- Procédé suivant la revendication 1, dans le cas où trois joints d'étanchéité (13a, 13b, 13c) sont interposés entre les surfaces d'appui (8a, 10a) de l'élément transportable (1) et de la structure fixe (10), lors de la mise en place de l'élément transportable (1), les joints (13a, 13b, 13c) étant disposés l'un à l'intérieur de l'autre, caractérisé par le fait qu'on mesure la pression dans l'espace (18) compris entre un premier joint (13a) et un second joint (13b), et qu'on met en dépression un second espace (19) compris entre le second joint (13b) et un troisième joint (13c), lorsqu'il se produit une fuite ou une rupture de joint au moment de la mise en place de l'élément transportable (1).

3.- Procédé suivant la revendication 2, dans le cas où l'élément transportable (1) comporte un logement intérieur venant dans le prolongement d'un espace intérieur de la structure fixe (10), lors de sa mise en place, caractérisé par le fait que le premier joint (13a) de plus faible dimension que le second joint (13b) et que le troisième joint (13c) est disposé vers l'intérieur de l'élément transportable et de la structure fixe, que le troisième joint (13c) de plus grande dimension que le second joint (13b) et que le premier joint (13a) est disposé vers l'extérieur de l'élément transportable (1) et de la structure fixe (10) et que le troisième joint (13c) est placé dans une position intermédiaire entre le premier joint (13a) et le troisième joint (13c).

4.- Procédé suivant la revendication 3, caractérisé par le fait que les joints (13a, 13b, 13c) sont des joints toriques disposés de manière concentrique.

5.- Procédé suivant l'une quelconque des revendications 1 à 4, caractérisé par le fait que la pression est mesurée dans l'espace (18) compris entre les joints d'étanchéité (13a, 13b) pendant une durée voisine de 30 secondes.

6.- Procédé suivant l'une quelconque des revendications 1 à 5, caractérisé par le fait que les joints (13a, 13b, 13c) subissent un écrasement, lors de la mise en place de l'élément transportable (1) compris entre 20 et 40 % de leur dimension dans la direction verticale, suivant laquelle s'applique le poids de l'élément transportable (1) venant reposer sur la structure fixe (10).

7.- Utilisation d'un procédé suivant l'une quelconque des revendications 1 à 6, pour le contrôle de la mise en place d'une hotte de transport d'un assemblage combustible comportant une vanne portée par un support (8) à sa partie inférieure, la surface inférieure (8a) du corps (8) de la vanne constituant la surface d'appui de la hotte (1), caractérisée par le fait qu'on mesure la pression dans l'espace (18) entre les joints (13a et 13b) par l'intermédiaire d'un canal (20) usiné dans le support de vanne (8) et débouchant à l'une de ses extrémités sur la surface d'appui (8a) entre les joints (13a, 13b).

FIG.1

FIG 2

Office européen
des brevets

**RAPPORT DE RECHERCHE EUROPEENNE**

Numero de la demande

EP 91 40 2224

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 948 723 (ANDREA et al.)<br>* Colonne 8, lignes 34-68; figures 13,27 *<br>--- | 1,7 | G 21 C 19/20<br>F 16 L 23/16 |
| A | DE-A-3 732 547 (DÖHRER)<br>* Colonne 9, ligne 41 - colonne 10, ligne 3; figure 6 *<br>--- | 1 | |
| A | FR-A-2 582 438 (C.E.A.)<br>* Page 12, lignes 16-28; figure 1 *<br>----- | 1,7 | |

DOMAINES TECHNIQUES
RECHERCHES (Int. Cl.5)

G 21 C
G 21 F
F 16 L

Le présent rapport a été établi pour toutes les revendications

| Lieu de la recherche | Date d'achèvement de la recherche | Examinateur |
|---|---|---|
| LA HAYE | 11-11-1991 | JANDL F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P0402)